# EUROPEAN PATENT APPLICATION

(11) **EP 4 438 456 A1**
(43) Date of publication of application: **02.10.2024**
(21) Application number: 22887662.9
(22) Date of filing: 27.10.2022
(51) Int. Cl.: B63B 25/00, B63J 3/04, B60L 53/30, B60L 53/18, B60L 53/51, B60L 53/52, B63J 3/00

(54) **CAR CARRIER AND FERRY HAVING CHARGING SYSTEM FOR ELECTRIC VEHICLE**

(30) Priority: 27.10.2021 KR 20210144528; 27.10.2021 KR 20210144529; 27.10.2021 KR 20210144530; 27.10.2021 KR 20210144531
(71) Applicant: Korea Shipbuilding & Offshore Engineering Co., Ltd., Jongno-gu Seoul 03058 (KR)
(72) Inventor: NOH, Chul-Ho, Ulsan 44032 (KR); KIM, Sang-Hyun, Ulsan 44032 (KR); KANG, Nam-Sook, Ulsan 44032 (KR); KWAK, Young-Real, Ulsan 44032 (KR); YOO, Seung-Jin, Ulsan 44032 (KR); YOO, Jae-Ik, Ulsan 44032 (KR); AN, Jun-Beum, Ulsan 44032 (KR)
(74) Representative: Maiwald GmbH
(86) International application number: PCT/KR2022/016612
(87) International publication number: WO 2023/075467

(57) **Abstract**

The present invention relates to a car carrier having an electric vehicle charging system capable of charging an electric vehicle in conjunction with a power management system of the car carrier. A car carrier having an electric vehicle charging system according to one embodiment of the present invention may comprise: a power management unit that manages the power supply transmitted from a generator generating electric power to the components of the car carrier; a charging management unit that receives at least a portion of the power from the generator by making a request to the power management unit, and manages charging of electric vehicles which are placed on the decks of the car carrier and transported; and a charging station that charges the electric vehicles with the power supplied according to the management of the charging management unit.

## Description

### [Technical Field]

The present invention relates to a car carrier and a ferry having a charging system for an electric vehicle.

### [Background Art]

In recent years, demand for an electric vehicle has been increased to reduce environmental pollution caused by use of fossil fuels. In general, an electric vehicle is structured to have its own battery and electric motor, charge the battery with electricity, and travel by driving the electric motor with the charged electricity. Accordingly, the electric vehicle may travel only when maintaining a constant state of charge.

In general, a car carrier may include a pure car carrier (PCC) and a combined carrier (or a pure car truck carrier (PCTC)) that transports both a passenger car and a cargo truck. This car carrier may also be referred to as a drive on/off ship because a car enters a ship under its own power, is loaded, and drives off the ship under its own power.

The pure car carrier (PCC) is a car carrier built to safely transport a car at a low freight rate without damaging the car during navigation or unloading.

In recent years, the number of the combined carriers (PCTCs) which may load passenger cars and trucks has been increased, and these carriers are becoming larger in size to be able to load large quantities of vehicles for dual use.

However, in terms of safety and economic efficiency, the electric vehicle loaded on a cardeck of the car carrier and transported may only charge its traveling battery up to a certain percentage at a departure port. In addition, the electric vehicle loaded on the car carrier may sail for a long time from the departure port to an arrival port in a harsh environment. For this reason, cases in which the travel battery is discharged may frequently occur, and an unloading process may be delayed as a person manually charges the discharged travel batteries one by one when a discharge state is confirmed in the unloading process of unloading the electric vehicle onto land at the arrival port. It is thus necessary to prevent this problem by charging the electric vehicle on the car carrier while shipping and then transporting the electric vehicle. The car carrier may sail continuously for the period ranging from as short as 7 weeks to as long as a month, depending on a route thereof. On the other hand, it may take several hours to charge the electric vehicle. Therefore, the economical and efficient operation of the car carrier is possible based on a management system that takes this feature into account without further increasing capacity of a ship electrical system or installing high-speed charging equipment.

In addition, a ferry refers to a ship that transports people, vehicles, or the like. The ferry may include a ship operated for as short as an hour or a ship operated for as long as one day. It may take several hours to charge the electric vehicle. Therefore, the efficient operation is possible when providing a charging service that may charge the electric vehicle while being loaded and transported on the ferry.

(Patent Document 1) Korean Patent Laid-Open Publication No. 10-2018-0001143

### [Disclosure]

### [Technical Problem Solution]

An aspect of the present invention is to provide a car carrier having a charging system for an electric vehicle in conjunction with a power management system of the car carrier or a ferry having a charging system for an electric vehicle that may charge the electric vehicle in conjunction with a direct current (DC)-based power system of the ferry.

### [Technical Solution]

According to an aspect of the present invention, provided is a car carrier having a charging system for an electric vehicle, the car carrier comprising: a power management unit managing supply of electric power transmitted from a generator generating the power to components of the car carrier; a charging management unit receiving at least a portion of the power generated by the generator by making a request to the power management unit, and managing charging of the electric vehicle disposed on a deck of the car carrier and transported; and a charging station charging the electric vehicle with the power supplied based on the management of the charging management unit.

According to an exemplary embodiment of the present invention, provided is a ferry having a charging system for an electric vehicle, the ferry comprising: a power management unit managing supply of electric power necessary for a component of the ferry; a charging management unit receiving the power by making a request to the power management unit, and managing charging of the electric vehicle disposed on a deck of the ferry and transported; a direct current (DC) power management unit managing power supply of direct current power based on the management of the power management unit; a DC power supply unit supplying the direct current power based on the management of the DC power management unit; a direct current switchboard for distributing the direct current power from the DC power supply unit; and a charging station charging the electric vehicle with the direct current power received through the direct current switchboard, based on the management of the charging management unit.

### [Advantageous Effects]

As set forth above, according to an exemplary embodiment in the present invention, it is possible to maintain a state of charge (SoC) of the battery at the certain level during the marine transportation of the electric vehicle to thus reduce the risk of fire occurring in the electric vehicle battery, prevent lower lifespan of the electric vehicle battery by preventing the electric vehicle battery from being completely discharged due to the harsh external environment on the deck of a car carrier, prevent the occurrence of a delay time for the electric vehicle to charge on land when the electric vehicle is unloaded, stably operate the power system by preventing the overload or the blackout in conjunction with the power management system in the car carrier, ensure the safety in the operation of the charging system to thus provide the improved safety and prevent the possibility of fire during the marine transportation of the electric vehicle, enable the charging of electric vehicles throughout the entire section of the car carrier deck by placing the charging station on the ceiling of the deck to thus enable the rapid vehicle loading and preventing cargo loss with no need to consider the placement division of the electric vehicles.

In addition, according to an exemplary embodiment of the present invention, it is possible to provide an the electric vehicle charging service when transporting the passenger and the electric vehicle by using the ferry to thus prevent the occurrence of the delay time for charging the electric vehicle on land and improve the system operation efficiency by configuring the direct current (DC)-based power system in the ferry.

### [Description of Drawings]

FIG. 1 is a schematic configuration diagram of a car carrier according to an exemplary embodiment of the present invention.
FIG. 2 is a schematic operation flowchart illustrating a charging operation of the car carrier according to an exemplary embodiment of the present invention.
FIG. 3 is a schematic configuration diagram illustrating an exemplary embodiment of a charging system for an electric vehicle of a car carrier according to an exemplary embodiment of the present invention.
FIGS. 4 and 5 are schematic configuration diagrams respectively illustrating another implementation example of the charging system for an electric vehicle of a car carrier according to an exemplary embodiment of the present invention.
FIG. 6 is a schematic configuration diagram of a car carrier according to another exemplary embodiment of the present invention.
FIG. 7 is a schematic configuration diagram illustrating a protection unit of the car carrier according to an exemplary embodiment of the present invention.
FIG. 8 is a schematic configuration diagram of a car carrier according to another exemplary embodiment of the present invention.
FIGS. 9A through 9C are schematic configuration diagrams illustrating placement of a charging station of a car carrier according to yet another exemplary embodiment of the present invention.
FIG. 10 is a schematic configuration diagram of a ferry according to an exemplary embodiment of the present invention.
FIG. 11 is a schematic configuration diagram illustrating a charging system for an electric vehicle of the ferry according to an exemplary embodiment of the present invention.
FIG. 12 is a schematic configuration diagram illustrating a charging system for an electric vehicle of the ferry according to another exemplary embodiment of the present invention.
FIG. 13 is a diagram illustrating an exemplary computing environment in which a portion of the car carrier or that of the ferry may be implemented according to an exemplary embodiment of the present invention.

### [Best Mode for Invention]

Hereinafter, embodiments of the present invention will be described in detail with reference to the accompanying drawings for those skilled in the art to which the present invention pertains to easily practice the present invention.

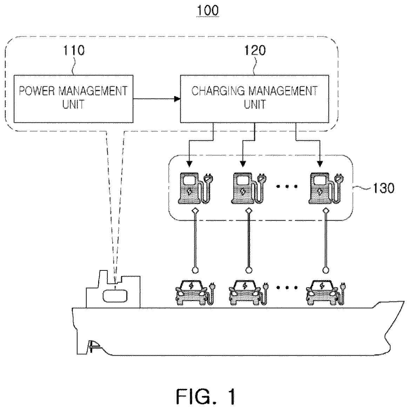

FIG. 1 is a schematic configuration diagram of a car carrier according to an exemplary embodiment of the present invention.

Referring to FIG. 1, a car carrier 100 according to an exemplary embodiment of the present invention may include a power management unit 110, a charging management unit 120, and a charging station 130.

The power management unit 110 may be a power management system (PMS) of the car carrier 100. Although not shown in the drawing, the car carrier 100 may have a variety of configurations, including a propulsion system for propelling a ship, a power generation system for generating electric power, a navigation system necessary for navigation, and an accommodation system such as a cabin, or the like. The power management unit 110 may manage supply of the power for the power generated by a generator to be properly supplied to a component requiring the power.

The charging management unit 120 may be used in conjunction with the power management unit 110, receive the power necessary for charging an electric vehicle from the power management unit 110 by making a request to the power management unit, and manage the charging performed by the charging station 130 based on the management of the power management unit 110. The charging station 130 may be installed on a deck of the car carrier 100, and may charge the power to the electric vehicle placed on the deck and transported.

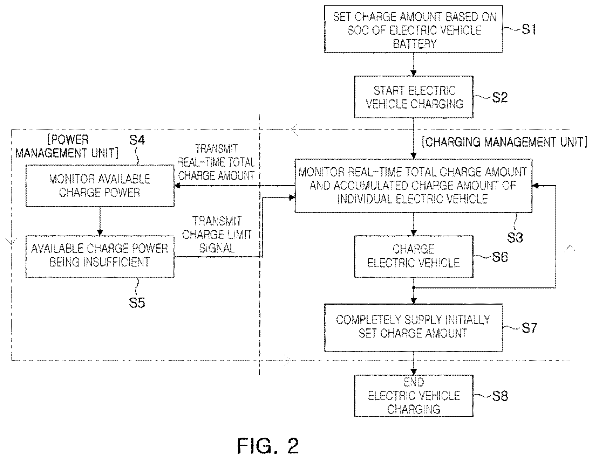

FIG. 2 is a schematic operation flowchart illustrating a charging operation of the car carrier according to an exemplary embodiment of the present invention.

Referring to FIG. 2 together with FIG. 1, the charging management unit 120 may start the electric vehicle charging by setting a charge amount based in a state of charge (SoC) of an electric vehicle battery (see S1 and S2 in FIG. 2), and request the power necessary for the charging from the power management unit 110 (see S3 in FIG. 2).

The charging management unit 120 may request the power necessary for the charging from the power management unit 110 based on a total charge amount of the electric vehicle charged at the charging station 130 and an accumulated charge amount of each electric vehicle.

For example, when the electric vehicle charging is necessary, the charging management unit 120 may receive a charge start signal from the power management unit 110 to thus charge all the electric vehicles having a charge demand with preset reference power or less. The reference power may be, for example, 5kW. The total charge amount of each electric vehicle may be set based on a value received from the individual charging station 130. For example, the charging management unit 120 may gradually reduce a charging speed or gradually limit the number of chargers for real-time demand power for each electric vehicle not to be more than available power received from the power management unit 110 by more a constant value or more. For example, the charging management unit 120 may gradually reduce the charging speed from 5 kW to 1 kW or limit the number of chargers from 100% to 50% and to zero %. The constant value may be, for example, 90%.

A demand power profile may be formed in the charging management unit 120, based on the charge demand of the electric vehicle, and this demand power profile may form and perform a demand power profile by the charge limitation method described above based on the available power.

The power management unit 110 may compare an amount of power requested from the charging management unit 120 with a remaining amount of the power generated by the generator of the car carrier 100, except for essential power necessary for operating the car carrier 100, and transmit a charge limit signal to the charging management unit 120 when available charge power is insufficient (see S4 and S5 in FIG. 2). The charging station 130 may receive the power through the charging management unit 120 to thus charge the electric vehicle (see S6 in FIG. 2), and end the electric vehicle charging when completely supplying an initially set charge amount (see S7 and S8 in FIG. 2).

In more detail, the power management unit 110 may detect the available power in a ship power system and transmit whether to start the electric vehicle charge. Here, the charging management unit 120 may update the available power in a situation where a load change factor, such as an operation mode switch or a heavy consumer operation, occurs in the power system.

That is, the charging management unit 120 may continuously transmit a signal indicating that the electric vehicle is being charged to the power management unit 110, and the power management unit 110 may transmit an electric vehicle charging stop instruction when the real-time demand power for each electric vehicle that is received from the charging management unit 120 is more than the constant value of the available power or when the charging management unit 120 transmits a signal indicating that an abnormal event occurs.

To describe a change in the ship power system based on the operation mode switch, the available charge power (=generation capacity-load amount) may be changed based on changes in the number (or the generation capacity) and load amount of generators in operation in the ship.

When "the available charge power is increased" based on the operation mode switch (for example, when the mode is switched from a normal seagoing mode to a port in/out mode),
①-1 the power management unit 110 requests to turn on an additional generator,
①-2 an additional power system load is turned on, and
①-3 the charging management unit 120 maintains/limits an electric vehicle (EV) charge state based on its own algorithm.
the corresponding units may be operated in the above order.

When "the available charge power is decreased" based on the operation mode switch (for example, when the mode is switched from a cargo fan ON mode to a cargo fan OFF mode),
②-1 the power management unit 110 turns off the power system load and stops the electric vehicle charging,
②-2 the generator is turned off,
②-3 the charging management unit 120 re-performs the EV charge state based on its own algorithm.
the corresponding units may be operated in the following order:
   When the available charge power is decreased due to the heavy consumer operation in the same operation mode,
   the power management unit 110 may check in advance to prevent blackout occurring due to insufficient power generation during the heavy consumer operation, and respond to the power system load, electric vehicle charging power, and the heavy consumer operation based on the above-described functions before starting the heavy consumer operation.

For example, when the power system load + the electric vehicle charging power + the heavy consumer operation > power generation of less than 90%, the power management unit 110 may start the heavy consumer operation and maintain the electric vehicle charge. When the power system load + the electric vehicle charging power + the heavy consume operation > power generation of more than 90%,
the power management unit 110 may further operate one additional generator and start the heavy consumer operation if ②-1 the power system load - the electric vehicle charging power + the heavy consumer operation > the power generation of more than 90%,
and stop the electric vehicle charging and start the heavy consumer operation if ②-2 the power system load - the heavy consumer operation > the power generation of less than 90%.

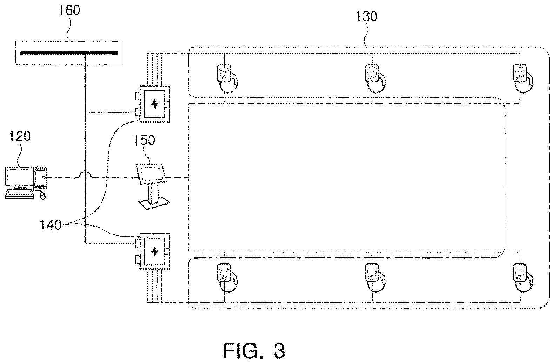

FIG. 3 is a schematic configuration diagram illustrating an exemplary embodiment of a charging system for an electric vehicle of a car carrier according to an exemplary embodiment of the present invention.

Referring to FIG. 3 together with FIGS. 1 and 2, the charging system for an electric vehicle of a car carrier according to an exemplary embodiment of the present invention may include the charging management unit 120, the plurality of the charging station 130, a distribution box 140, a system line 160, and further include a local charging control unit 150. Under control of the charging management unit 120, the power from the system line 160 may be supplied to each of the plurality of the charging station 130 through the distribution box 140. The system line 160 may supply alternating current (AC) power of 220 V, which is supplied by transforming a voltage of the alternating current power generated by the ship generator, and the distribution box 140 may distribute the received alternating current power to each of the plurality of the charging station 130. The charging management unit 120 may control the charging of each of the plurality of the charging station 130, and the added local charging control unit 150 may control the charging of each of the plurality of the charging stations 130 under the control of the charging management unit 120.

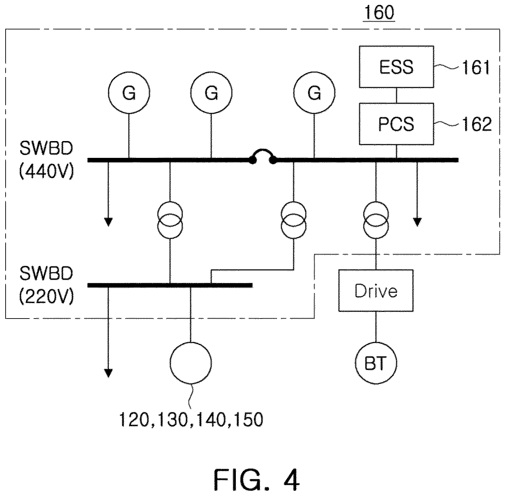

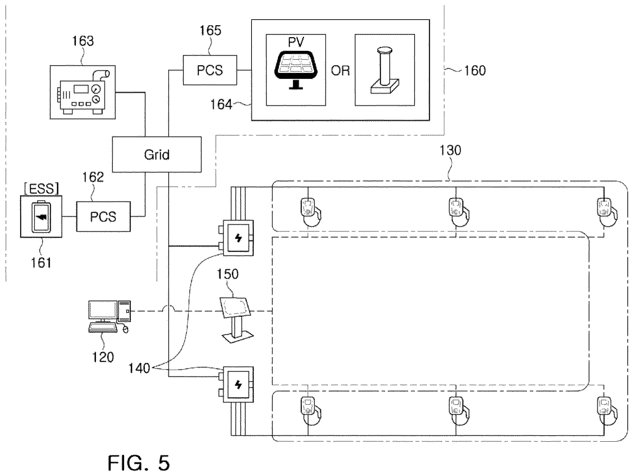

FIGS. 4 and 5 are schematic configuration diagrams respectively illustrating another implementation example of the charging system for an electric vehicle of a car carrier according to an exemplary embodiment of the present invention.

Referring to FIG. 4 together with FIG. 1, another implementation example of the charging system of a car carrier according to an exemplary embodiment of the present invention may further include an energy saving system (ESS) 161 and a first power converter system (PCS) 162.

The car carrier 100 may be operated in a sea-going mode or the port in/out mode. A stable operation of the electric vehicle charging system may be ensured in the sea-going mode, and load-up/down performance of a bow thruster (BT) may be improved in the port in/out mode where the electric vehicle charging is not performed.

In more detail, in the sea-going mode, the available power for charging the electric vehicle may be constantly variable based on the changes in the power generation and the load amount (or intermittent load capacity, a cargo hold fan operation, or the like) even during its operation. Therefore, it may be difficult to supply constant charge power to the electric vehicle (EV) charging system (EVCS). Therefore, the energy saving system (ESS) 161 may perform charge and discharge operations based on the available power to supply the constant charge power to the electric vehicle charging system. However, the charging may be limited by the power management unit 110 when the available power is changed by a certain range (for example, 10%) or more. In addition, rapid load-up/down performance may be necessary when performing dynamic positioning using the bow thruster (BT) in the port in/out mode. However, when the power is suddenly changed, a diesel generator G may require tens of seconds or more to change its output. Here, the energy saving system (ESS) 161 may perform immediate output control by using its rapid response based on the first power converter system (PCS) 162.

Referring to FIG. 5 together with FIG. 1, another example of the car carrier charging system for an electric vehicle according to an exemplary embodiment of the present invention may further include a renewable energy generation unit 164 and a second power converter system (PCS) 165 in addition to the energy storage unit (ESS) 161 and the first power converter system (PCS) 162.

As environmental regulations are recently emerged, the car carrier 100 may be installed with the renewable energy generation unit 164 such as a rotor sail that utilizes solar power or wind power, or installed with the renewable energy generation unit 164 such as a solar power source on its upper deck. The renewable energy generation unit 164 may have an intermittent output feature, and may thus cause instability in the power system of the car carrier 100 when its installed capacity is increased.

For this reason, the power output from the renewable energy generation unit 164 may be first used to charge the electric vehicle through the second power converter system 165, excess power may be saved in the energy saving system (ESS) 161 when the excess power is generated, and the charging may be performed using the power saved in the energy saving system (ESS) 161 when the electric vehicle charging capacity is insufficient. That is, the power requirements and timing for charging the electric vehicle may be very irregular. Therefore, it is possible to perform the stable operation of the system by using the renewable energy generation unit 164 and the energy saving system (ESS) 161, and improve the system instability caused by a renewable power source.

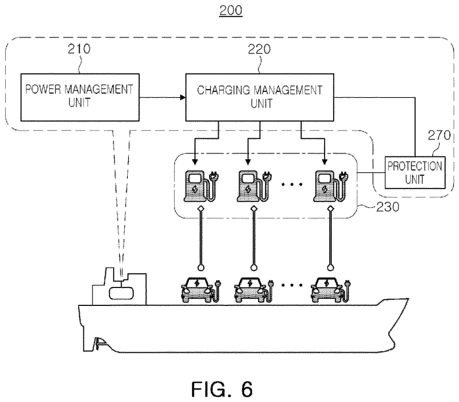

FIG. 6 is a schematic configuration diagram of a car carrier according to another exemplary embodiment of the present invention.

Referring to FIG. 6, a car carrier 200 according to an exemplary embodiment of the present invention may include a power management unit 210, a charging management unit 220, a charging station 230, and a protection unit 270.

The functions and operations of the power management unit 210, the charging management unit 220, and the charging station 230 are the same as those described with reference to FIG. 1, and the description thus omits their descriptions.

The protection unit 270 may block the supply of the power transmitted from the generator to the charging station 230 based on the management of the power management unit 210 when the abnormal event occurs.

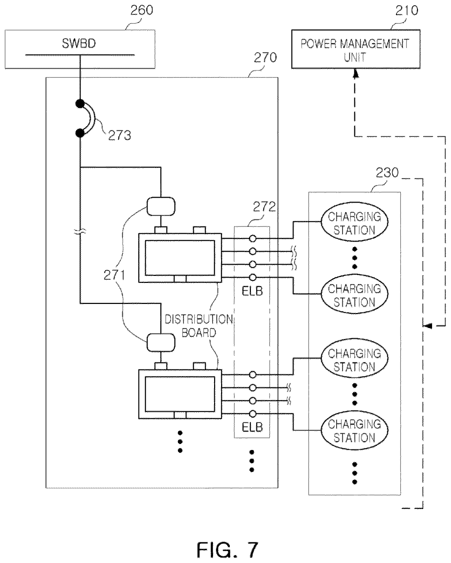

FIG. 7 is a schematic configuration diagram illustrating a protection unit of the car carrier according to another exemplary embodiment of the present invention.

The electric vehicle charging system installed on the ship may be considered as having a variable large capacity load such as a bow thruster or an air conditioning system (or a heating, ventilation, and air conditioning (HVAC) system), and the electric vehicle charging system may supply the power directly to a cargo. Therefore, it is very important to ensure system operation safety. Therefore, in an exemplary embodiment of the present invention, the protection unit that protects the electric vehicle charging system may be configured as shown in FIG. 4.

Referring to FIGS. 6 and 7, the protection unit 270 of the car carrier according to an exemplary embodiment of the present invention may include a molded case circuit breaker 271 and an electric leakage breaker 272, and may further include an auxiliary breaker 273.

The molded case circuit breaker 271 may block the power transmission between the charging station 230 and a system line 260 for supplying the power generated by the generator, thus preventing an accident from expanding to the system when the accident occurs in the charging system. The electric leakage breaker 272 may be installed on each branch line for supplying the power between the molded case circuit breaker 271 and the charging station 230 to block the power transmission.

That is, the charging station 230 may stop the operation of the charging station by using a built-in protection circuit to prepare for a case where a problem (e.g., overcurrent or over/undervoltage) occurs in a charging station body, a charging cable, or like, thus preventing the accident from expanding. The molded case circuit breaker (MCCB) 171 may be installed in a feeder, thus preventing the accident from expanding to the system if the accident occurs in the charging system. The electric leakage breaker (ELB) 272 may be installed on a branch line for supply the power to the charging station, thus preventing electric shock during the electric vehicle charging performed through a charging cable and a connector.

In addition, the auxiliary breaker 273 may be placed between the system line 160 and the molded case circuit breaker 271 to block the power transmission when the voltage and current of the system line 260 exist within a preset reference range or more. The auxiliary breaker 273 may perform a backup protection operation of the molded case circuit breaker 171 by using a distance relay method. The distance relay method may be a method of tripping the breaker when a certain difference or more occurs between the voltage and current of the system in a normal state, and has a feature where a trip time becomes slower as being further away from a location of a failure point.

Each charging station 230 may transmit state information of charging station such as its operation state, power amount (or current amount), temperature, or the like in real time to the power management unit 210. Therefore, the power management unit 210 may specify the failure location based on the above-mentioned information when the electric vehicle charging system fails. Through this configuration, it may be possible to resume the operation of the charging system for an electric vehicle by performing an after service (A/S) for the charging station or the cable.

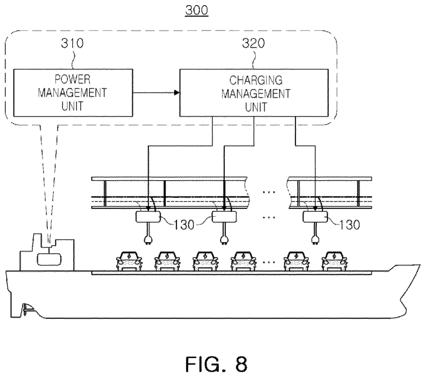

FIG. 8 is a schematic configuration diagram of a car carrier according to another exemplary embodiment of the present invention.

Referring to FIG. 8, a car carrier 300 according to another exemplary embodiment of the present invention may include a power management unit 310, a charging management unit 320, and a charging station 330.

The operations and functions of the power management unit 110 and the charging management unit 320 are the same as those described with reference to FIG. 1, and the description thus omits their detailed descriptions. The charging station 130 may be installed on the deck of the car carrier 100 and may charge the power to the electric vehicle placed on the deck and transported, and have at least a portion placed on a ceiling of the deck of the car carrier 300, and charge the electric vehicle with the received power based on the management of the charging management unit 320.

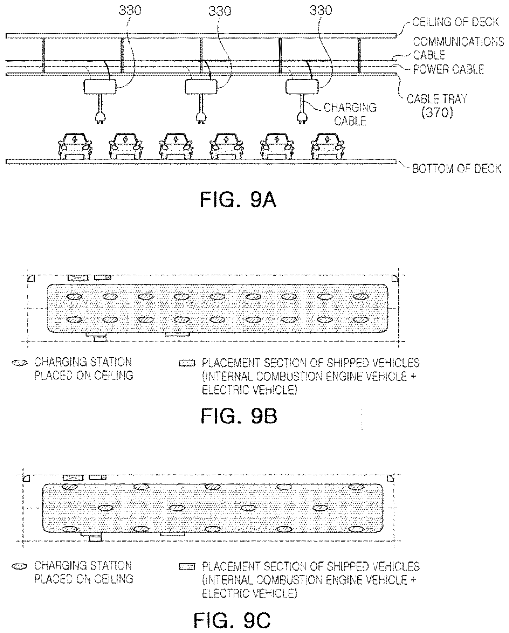

FIGS. 9A through 9C are schematic configuration diagrams illustrating placement of a charging station of a car carrier according to yet another exemplary embodiment of the present invention.

Referring to FIGS. 9A and 9B together with FIG. 8, the charging station 330 may be placed on the ceiling of the deck of the car carrier 300 where the electric vehicle is placed. The charging station 330 may be placed on the ceiling of the deck, and the charging cable from the charging station 330 may be connected to the electric vehicle of the deck to supply the charge power. The power from the power management unit 310 may be supplied to the charging station 330 through a power cable, a management signal from the charging management unit 320 may be transmitted to the charging station 330 through a communications cable, and the power cable and the communications cable may be held by a cable tray 370. The plurality of charging stations 330 may be provided. The plurality of charging stations 330 may be placed on the ceiling of the deck while having a regular interval therebetween, and may be placed considering a location of a ramp that enables its movement between the decks. In addition, referring to FIG. 9C, the charging station 330 may have a portion placed on a wall of the deck, and a portion placed on the ceiling of the deck. The cable tray may be used in common with a lighting component, and the charging station 330 may be installed on the ceiling of the deck, thus charging and controlling the electric vehicle in an entire section of the deck with no cargo loss, regardless of a parking location of the electric vehicle.

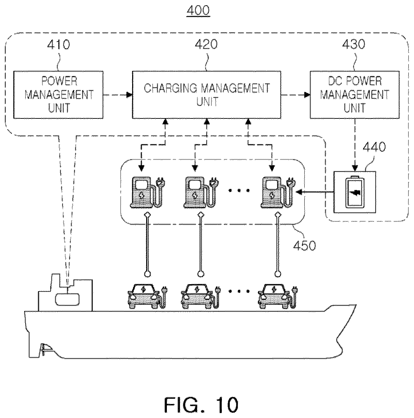

FIG. 10 is a schematic configuration diagram of a ferry according to an exemplary embodiment of the present invention.

Referring to FIG. 10, a ferry 400 according to an exemplary embodiment of the present invention may include a power management unit 410, a charging management unit 420, a direct current (DC) power management unit 430, a DC power supply unit 440, and a charging station 450.

The power management unit 410 may be a power management system (PMS) of the ferry 400. Although not shown in the drawing, the ferry 400 may use a variety of configurations, including a propulsion system for propelling a ship, a power generation system for generating electric power, a navigation system necessary for navigation, and an accommodation system such as a cabin, or the like. The power management unit 410 may manage power supply of the power generated by the generator to be properly supplied to a configuration requiring the power.

The charging management unit 420 may be in conjunction with the power management unit 110, receive the power necessary for charging the electric vehicle by making a request to the power management unit 410, and manage the charging performed by the charging station 450 based on the management of the power management unit 410. The charging station 450 may be installed on a deck of the ferry 400, and may charge the power to the electric vehicle placed on the deck and transported.

The DC power management unit 430 may be a battery management system (BMS) of the ferry 400, and manage the power supply of the direct current power transmitted to the charging station 150 by a power supply request of the charging management unit 420 based on the management of the power management unit 110.

The DC power supply unit 440 may supply the direct current power to the charging station 450 based on the management of the DC power management unit 430.

The charging station 450 may receive the direct current power from the DC power supply unit 440 and may charge the power to the electric vehicle based on the management of the charging management unit 120.

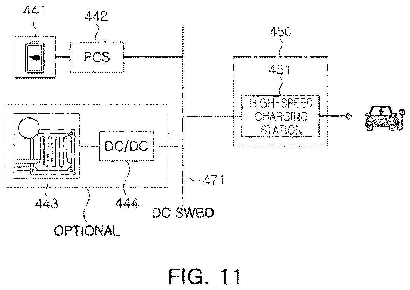

FIG. 11 is a schematic configuration diagram illustrating a charging system for an electric vehicle of the ferry according to an exemplary embodiment of the present invention.

Referring to FIG. 11 together with FIG. 10, the charging station 150 of the charging system for an electric vehicle of the ferry 400 according to an exemplary embodiment of the present invention may include a high-speed charging station 451 charging the electric vehicle at a high speed by receiving the direct current power from the DC power supply unit 440. The plurality of high-speed charging stations 451 may be provided if necessary. The high-speed charging station 451 may charge the electric vehicle battery by including an enclosure including basic circuits such as a protection device, a communications device, and a measuring device, and a converter for controlling a charging speed, a cable for charging the electric vehicle, and a charger for its connection to the electric vehicle, and may include payment and authentication functions.

The DC power supply unit 440 may include an energy saving system (ESS) 441 that saves excess power of the ferry, and adopt a first power converter system (PCS) 442 converting the power discharged from the energy saving system 441 to preset direct current power. A DC switchboard (DC SWBD) 471 may transmit the DC power from the first power converter system 442 to the high-speed charging station 451.

As described above, the power source and the load based on the DC power input and output may be connected to the DC switchboard 171 to thus reduce conversion steps, thereby securing improved efficiency.

To describe the charging operation of the electric vehicle, the electric vehicle may go through an authentication process after a charger of the charging station 450 is connected to the electric vehicle based on needs of a user of the electric vehicle. In this case, the electric vehicle charging may be started, and the state of charge (SoC) of the electric vehicle battery may be checked in real time through the charging cable. When charging the electric vehicle, the charging management unit 420 of the charging system may continuously monitor a total power supply in real time and the SoC of the battery or accumulated charge amount of each electric vehicle, and simultaneously transmit real-time charge amount information in real time to the power management unit 410 and the DC power management unit 430. When achieving the specified SoC of the battery and a set charge amount, the power supply to the electric vehicle may be stopped based on the charge power.

Meanwhile, the DC power supply unit 440 may further include a fuel cell 443 and a second power converter (DC/DC) system 444.

The fuel cell 443 may electrochemically react a fuel and an oxidizer to thus generate the direct current power. The second power converter system 444 may convert the direct current power from the fuel cell 443 to the preset direct current power, and transmit the same to the high-speed charging station 451 through the direct current switchboard 471.

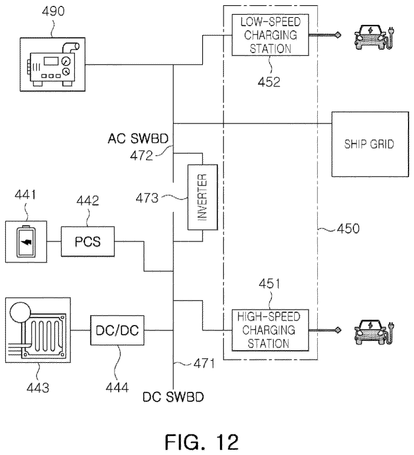

FIG. 12 is a schematic configuration diagram illustrating a charging system for an electric vehicle of the ferry according to another exemplary embodiment of the present invention.

Referring to FIG. 12 together with FIG. 10, the charging station 450 of the charging system for an electric vehicle of the ferry 400 according to another exemplary embodiment of the present invention may further include a low-speed charging station 452 charging the electric vehicle by receiving the alternating current power from a generator 490 of the ferry. The plurality of low-speed charging stations 452 may be provided if necessary.

Accordingly, the charging station 450 may further adopt an alternating current (AC) switchboard (AC SWBD) 472 that transmits the alternating current power from the generator 490 to the low-speed charging station 452. When more of the direct current power of the high-speed charging station 451 is necessary, the charging station 450 may further adopt an inverter 473 receiving the alternating current power generated by the generator 490 through the AC switchboard 472, converts the same to the preset direct current power, and supply the same to the high-speed charging station 451 through the direct current switchboard 471. In addition, when more of the alternating current power of the low-speed charging station 452 is necessary, the inverter 473 may conversely convert the direct current power to the alternating current power and supply the same to the low-speed charging station 452.

As mentioned above, the power source and the load based on the DC power input and output may be connected to the DC switchboard 171 to thus reduce the conversion steps, thereby securing the improved efficiency. In addition, among existing loads of the ferry, loads connected to the alternating current switchboard 472 through a variable frequency drive (VFD), such as the bow thruster or the heating, ventilation, & air conditioning (HVAC) system, may also be connected to the direct current switchboard 471, thereby securing the improved efficiency.

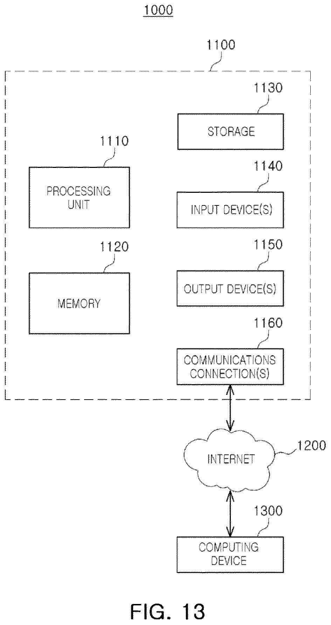

FIG. 13 is a diagram illustrating an exemplary computing environment in which a portion of the car carrier or that of the ferry may be implemented according to an exemplary embodiment of the present invention, and illustrates an example of a system 1000 that includes a computing device 1100 configured to implement one or more exemplary embodiments described above. For example, the computing device 1100 may include a personal computer, a server computer, a handheld or laptop device, a mobile device (e.g., a mobile phone, a personal digital assistants (PDA), or a media player), a multiprocessor system, a consumer electronic device, a mini computer, a mainframe computer, a distributed computing environment including any system or device described above, and the like, and is not limited thereto.

The computing device 1100 may include at least one processing unit 1110 and a memory 1120. Here, the processing unit 1110 may include, for example, a central processing unit (CPU), a graphic processing unit (GPU), a microprocessor, an application specific integrated circuit (ASIC), a field programmable gate array (FPGA), or the like, and have a plurality of cores. The memory 1120 may be a volatile memory (for example, a random access memory (RAM)), a non-volatile memory (for example, a read only memory (ROM) or a flash memory), or a combination thereof.

In addition, the computing device 1100 may further include a storage 1130. The storage 1130 may include a magnetic storage, an optical storage, or the like, and is not limited thereto. Computer-readable instructions for implementing one or more exemplary embodiments disclosed in the specification may be saved in the storage 1130, and other computer-readable instructions for implementing an operating system, an application program, or the like, may also be saved in the storage 1130. The computer-readable instructions saved in the storage 1130 may be loaded into the memory 1120 to be executed by the processing unit 1110.

In addition, the computing device 1100 may include an input device(s) 1140 and an output device(s) 1150. Here, the input device(s) 1140 may include, for example, a keyboard, a mouse, a pen, an audio input device, a touch input device, an infrared camera, a video input device, or any other input device. In addition, the output device(s) 1150 may include, for example, one or more displays, a speaker, a printer, or any other output device. In addition, the computing device 1100 may also use an input device or an output device, included in another computing device, as the input device(s) 1140 or the output device(s) 1150.

In addition, the computing device 1100 may include a communications connection(s) 1160 enabling its communications with another device (e.g., computing device 1300) through a network 1200. Here, the communications connection(s) 1160 may include a modem, a network interface card (NIC), an integrated network interface, a radio frequency transmitter/receiver, an infrared port, a universal serial bus (USB) connection, or another interface for connecting the computing device 1100 to another computing device. In addition, the communications connection(s) 1160 may include a wired connection or a wireless connection.

The respective components of the computing device 1100 described above may be connected to each other through various interconnections (for example, a peripheral component interconnection (PCI), a USB, a firmware (IEEE 1394), and an optical bus structure) such as the bus, and the like, or be interconnected by the network.

As used in the specification, terms such as the "power management unit," the "charging management unit," the "local charging control unit," and the "DC power management unit" may generally refer to hardware, a combination of hardware and software, software, or a computer-related entity that is software in progress. For example, components such as the "power management unit," the "charging management unit," the "local charging control unit," and the "DC power management unit" may be processes, processors, objects, executables, execution threads, programs, and/or computers, executed by the processor, and is not limited thereto. For example, both of an application that is being driven by a controller and the controller may be the components. One or more components may exist in the process and/or the execution thread, and the component may be localized in one computer or be distributed between two or more computers.

As set forth above, according to an exemplary embodiment of the present invention, it is possible to maintain the state of charge (SoC) of the battery at the certain level during the marine transportation of the electric vehicle to thus reduce the risk of fire occurring in the electric vehicle battery, prevent the lower lifespan of the electric vehicle battery by preventing the battery of the electric vehicle from being completely discharged due to the harsh external environment on the deck of the car carrier, prevent the occurrence of the delay time for charging the electric vehicle on land when the electric vehicle is unloaded, stably operate the power system by preventing the overload and the blackout in conjunction with the power management system in the car carrier, ensure the safety in the operation of the charging system to thus provide the improved safety and prevent the possibility of fire during the marine transportation of the electric vehicle, enable the charging of electric vehicles throughout the entire section of the car carrier deck by placing the charging station on the ceiling of the deck to thus enable the rapid vehicle loading and preventing the cargo loss with no need to consider the placement section of the electric vehicles.

In addition, according to an exemplary embodiment of the present invention, it is possible to provide the electric vehicle charging service when transporting the passenger and the electric vehicle by using the ferry to thus prevent the occurrence of the delay time for charging the electric vehicle on land and improve the system operation efficiency by configuring the DC-based power system in the ferry.

The present invention described above is not limited to the exemplary embodiments described above or the accompanying drawings, and limited by the scope of the claims described below, and those skilled in the art to which the present invention belongs may easily appreciate that the configuration of the present invention may be changed and modified in various ways without departing from the scope of the present invention.

## Claims

1. A car carrier having a charging system for an electric vehicle, the car carrier comprising:
a power management unit managing supply of electric power transmitted from a generator generating the power to components of the car carrier;
a charging management unit receiving at least a portion of the power generated by the generator by making a request to the power management unit, and managing charging of the electric vehicle disposed on a deck of the car carrier and transported; and
a charging station charging the electric vehicle with the power supplied based on the management of the charging management unit.

2. The car carrier of claim 1, wherein the power management unit receives the request for the power necessary for the charging from the charging management unit,
compares an amount of the power requested from the charging management unit with a remaining amount of the power generated by the generator, except for essential power necessary for operating the car carrier, and
transmits a charge limit signal to the charging management unit when available charge power is insufficient.

3. The car carrier of claim 1, wherein the charging management unit request the power necessary for the charging from the power management unit based on a total charge amount of the electric vehicle charged at the charging station and an accumulated charge amount of each electric vehicle.

4. The car carrier of claim 1, further comprising an energy saving system charging excess power among the power generated by the generator, and discharging the charged power to the charging station by using the charging management unit under control of the power management unit.

5. The car carrier of claim 4, further comprising a renewable energy generation unit generating the power by using solar power or wind power to provide charge power to the charging station by using the charging management unit, and
charging the excess power to the energy saving system.

6. The car carrier of claim 1, further comprising a protection unit blocking the supply of the power transmitted from the generator to the charging station based on the management of the power management unit when an abnormal event occurs.

7. The car carrier of claim 6, wherein the protection unit includes
a molded case circuit breaker blocking the power transmission between the charging station and a system line for supplying the power generated by the generator; and
an electric leakage breaker installed on each branch line for supplying the power between the molded case circuit breaker and the charging station to block the power transmission.

8. The car carrier of claim 7, wherein the protection unit further includes an auxiliary breaker placed between the system line and the molded case circuit breaker to block the power transmission when the voltage and current of the system line exist within a preset reference range or more.

9. The car carrier having the electric vehicle charging function of claim 1, wherein the charging station has at least a portion placed on a ceiling of the deck of the car carrier, and
charges the electric vehicle with the received power based on the management of the charging management unit.

10. The car carrier of claim 9, further comprising:
a communications cable for transmitting a management signal from the charging management unit to the charging station, and
a cable tray holding a power cable for supplying the power from the power management unit to the charging station.

11. The car carrier of claim 9, wherein the charging station has a portion placed on a wall of the deck.

12. A ferry having a charging system for an electric vehicle, the ferry comprising:
a power management unit managing supply of electric power necessary for a component of the ferry;
a charging management unit receiving the power by making a request to the power management unit, and managing charging of the electric vehicle disposed on a deck of the ferry and transported;
a direct current (DC) power management unit managing power supply of direct current power based on the management of the power management unit;
a DC power supply unit supplying the direct current power based on the management of the DC power management unit;
a direct current switchboard for distributing the direct current power from the DC power supply unit; and
a charging station charging the electric vehicle with the direct current power received through the direct current switchboard, based on the management of the charging management unit.

13. The ferry of claim 12, wherein the power management unit receives the request for the power necessary for the charging from the charging management unit,
compares an amount of the power requested from the charging management unit with a remaining amount of the power except for essential power necessary for operating the ferry, and
transmits a charge limit signal to the charging management unit when available power is insufficient.

14. The ferry of claim 12, wherein the charging management unit request the power necessary for the charging from the power management unit based on a total charge amount of the electric vehicle charged at the charging station and an accumulated charge amount of each electric vehicle.

15. The ferry of claim 12, wherein the DC power supply unit includes an energy saving system.

16. The ferry of claim 12, further comprising an inverter converting alternating current power received through an alternating current switchboard for distributing the alternating current power generated by a generator generating the power to the direct current power, or
converting the direct current power received through the direct current switchboard to the alternating current power and transmitting the alternating current power to the alternating current switchboard.

17. The ferry of claim 12, wherein the charging station includes at least one high-speed charging station charging the electric vehicle at a high speed by receiving the direct current power distributed through the direct current switchboard.

18. The ferry of claim 16, wherein the charging station includes
at least one high-speed charging station charging the electric vehicle at a high speed by distributing the direct current power through the direct current switchboard, and
at least one low-speed charging station charging the electric vehicle at a low speed by distributing the alternating current power through the alternating current switchboard.

19. The ferry of claim 13, wherein the DC power supply unit further includes a fuel cell.
